# EUROPEAN PATENT SPECIFICATION

(11) **EP 4 616 024 B1**
(45) Date of publication and mention of the grant of the patent: **02.12.2026**
(21) Application number: 22798180.0
(22) Date of filing: 02.09.2022
(51) Int. Cl.: D04H 1/02, D04H 1/425, D04H 1/732, E04B 1/62, D21B 1/06

(54) **PROCESS FOR MANUFACTURING OF LOOSE FILL INSULATION AND AN INSULATION MATERIAL PRODUCED ACCORDING TO SAID PROCESS**
VERFAHREN ZUR HERSTELLUNG VON SCHÜTTDÄMMUNG UND EIN NACH DIESEM VERFAHREN HERGESTELLTES DÄMMMATERIAL
PROCÉDÉ DE FABRICATION D'UN ISOLANT PARTICULAIRE DE BOURRAGE ET MATÉRIAU ISOLANT PRODUIT SELON LEDIT PROCÉDÉ

(30) Priority: 02.09.2021 SE 2151097
(43) Date of publication of application: 17.09.2025
(73) Proprietor: TopCell Sweden AB, 777 60 Söderbärke (SE)
(72) Inventor: ANDERSSON, Tommy, 777 93 Söderbärke (SE); WIKSTRÖM, Ulf, 784 55 Borlänge (SE); OLSSON, Bo, 428 33 Kållered (SE); LUDVIGSSON, Hans-Olof, 777 93 Söderbärke (SE); ISVÉN, Anders, 421 31 Västra Frölunda (SE)
(74) Representative: Kransell & Wennborg KB
(86) International application number: PCT/IB2022/000506
(87) International publication number: WO 2023/031670

(56) References cited:
- EP-A1- 0 631 009
- US-A- 3 302 246
- US-A- 4 302 488

## Description

### Technical field

The present disclosure relates to loose fill insulation comprising plant fibers as material as well as a process for manufacturing said loose fill comprising compacting and packaging.

### Background

Today, insulation for use in buildings is produced in a variety of different raw materials including polyurethane, polystyrene, glass, diabase, or cellulose. Regenerated cellulose is described in US 2005/0279963, wherein the raw material consists of paper, board, or similar recycled material. These materials all have different properties with respect to fire retardancy, convection, dusting, soundproofing, and isolation as well as different heat inertia. The work environment when handling of insulation material can vary greatly. The material can cause itching and personnel that handle the insulation material risks inhaling particles, that, over time cause damage. Asbestos, which have many advantageous properties, has from this reason been prohibited for a long time.

It is desirable that insulation materials have a high heat inertia in combination with low convection, as these properties reduces the cost for heating or cooling. During production of loose fill it is desirable to compact the product as much as possible to avoid transporting excess air. Transportation to for example a construction site where insulation of for example a building is conducted.

Plant fibers have for a long time been used in clothing, but only to a limited extent in buildings. There are several patents describing usage of textiles mixed into insulation. There is today an on-going collection of textiles to re-use the fibers from these as a raw material when manufacturing new insulation for clothing.

Treatment of plant fibers has been the basis for textile development for many thousands of years. Flax has traditionally been retted to extract fibers. Extraction of fibers from harder plants have traditionally not been possible.

CA2061979A1 describes how insulation of wood fibers can be produced in a traditional chemi-thermomechanical cellulose process, wherein there is a high energy consumption to process the wood material, and to first dry off water and later remaining moisture from the material.

During production of fiber material different raw materials are used and WO 2021/041651 describes a method for the usage of Artificial Intelligence (AI) to control how a mixture of different material according to specified recipe can be conducted.

US 4,349,413 describes how an insulation material med fire retardant properties can be produced.

US 4,191,335 describes a refiner for refining of dry material (cellulosic pulp), wherein measures have been taken so that the fibers will not form knots or lumps. For this purpose air is blown into the refining chamber partly for cooling and partly for assure that fibers does not stuck between the refiner discs and housing as it is regularly in the periphery of the refining discs that knots and lumps are formed. When producing fiber to make paper it is important that there are not knots or lumps. US 2007/0036961 describes how pods with fire retardant substances can be applied in the loose fill insulation made from cellulose fibers prior to it being packed. So that, when the insulation is applied with a blow machine, the fire-retardant substance is liberated together with binder and other additives, which otherwise causes aging of the packed insulation. This can also cause increased dusting at a later application with a blow machine.

WO 2012/108978 describes a method for fire-retardancy in loose fill insulation and have useful definitions defining fibers from wood which have not undergone any previous treatment. This patented process is overall a traditional paper production process and thereby a wet-forming process. One disadvantage with this type of process is that there is a lot of energy required to dry the fibers.

US 10,185,427 B2 describes a process for how addition of fire-retardant substance to loose fill being produced from recycled paper that have been refined to fibers can be conducted. The process also describes how staples and other metal objects can be removed from the recycled paper, since those contains heavy metals from the printing process.

CA1038831A describes how pouring of loose fill insulation into flexible containers can be conducted.

WO 2018/021956 describes a machine and a method for compressing loose fill for insulation to compact discs with a thickness of about 2 cm and a density of at least 160 kg/m³. The thickness of the discs becomes small since there is a lot of air that is needed to be pressed out by the machine.

CA2065357A1 describes how mineral wool can be recycled and handled in the process and in later stages reused at the production av regenerated insulation material with the same energy usage as from the beginning.

US4302488 A describes a cellulose fiber insulation, a manufacturing method and a plant for practicing the method.

US3302246 A describes a method of processing bagasse, a fibrous byproduct of sugarcane, by systematically removing impurities and breaking down the material into usable fibers through multiple steps of milling and classification.

### Problem description

Major problems when producing traditional isolation materials in the form of loos fill is that the materials many times are produced from polyurethane, polystyrene, glass as well as other materials that may have negative impact on the health, for example through dusting when applied by a blow machine. Other problems are that fire retardant or mold inhibiting substances many times has to be added to obtain desired properties. When compounding raw material, the process is also most often energy demanding. Yet another problem of traditional handling of loose fill is that the transportation cost, to for example a production site, often adds up to 30% of the cost of the material.

### Solution to the problem

The method of the present disclosure solves the problem with manufacturing an insulation material with loose fill comprising plant fibers. The raw material for the loose fill insulation may comprise different types of grass, other types of cellulosic material and may comprise different types of lignin-containing cellulosic material having a lignin content of 1-40%. An example of a natural lignin-containing cellulosic material is different types of bamboo. The insulating material med loos fill can delay spreading of fire, and a low energy consumption is needed for the production. The material does not neither cause dust clouds when applied with blow machines.

The loose fill insulation can consist of several raw materials that are carefully proportioned with the aid of scales, cameras, ultrasounds or different electromagnetic frequencies.

In experiments with a traditional refiner with milling stones, the milling stones have been provided with new tracks and bars around the milling stones to investigate if the refining of raw material to fiber can be conducted in a satisfactory way. These experiments are the basis of the method of producing an insulation material, wherein the original moisture content in the material is sufficient for the process. A milling device, a refiner or other suitable device is used to refine the material.

The hygroscopic and other properties in the material are preserved by that the temperature is kept below 185 °C. For example, it also hinders bugs and insects to penetrate, move around in or stay in the material. Drying of the material provides for that fire retardant substance is more easily absorbed. Drying is conducted by hot air and/or microwaves and/or IR in a drying oven. During and/or after drying, the material is separated by blowing with an air stream at a temperature of below 185 °C. Because of blowing with the air stream, the proportioned and refined plant fibers are separated in a first fiber stream that due to the size of the fibers will not blow of a transportation belt and this first fiber stream has fibers with substantially a length of at least 5 mm. The proportioned and refined plant fibers are also separated in a second fiber stream that due to its size are blown off the transportation belt and these fibers substantially have a length of less than 5 mm and substantially a thickness of 0.5 mm. Whereby the second fiber stream is transported by the air stream to at least one cyclone, wherein the second fiber stream are separated in at least a first fiber fraction and a second fiber fraction. The first fiber fraction contains fibers with a fiber length of substantially less than 0.1 mm and the second fiber fraction contains fibers with substantially a fiber length of 0.1 to 5 mm. In embodiments where drying is conducted by hot air, the same air can also be used for separating the proportioned and refined plant fibers in a first fiber stream and second fiber stream. In embodiments where drying is only conducted with microwaves and/or IR typically a separate fan is used to create the air stream that carries the proportioned and refined plant fibers for separation from the belt.

Regulation of the size of the fibers that are separated in the at least one cyclone may be conducted by means of a fan or similar that creates a counter-pressure to the air flow in the drying oven and at least one cyclone. Those fibers that constitutes the first fiber stream and have substantially a length of at least 5 mm and the second fiber fraction that has been separated in the at least one cyclone are mixed which is advantageous as it increased the yield of the process as well as that finished loose fill insulation is provided with insulation properties as the second fiber fraction fills voids in between fibers from the first fiber stream.

The air stream in the hot air that is used in the drying typically has a flow speed of 20 000 - 60 000 m³/h.

The dry content in the first and second fiber stream is typically maximum 10 wt-%. Such dry content is beneficial for separation of the fiber streams as well as for transportation economy.

Separation of the first fiber fraction containing fibers with a fiber length of less than 0.1 mm in the at least one cyclone reduces the dusting of application of the finished loose fill insulation, thereby creating a more healthier work atmosphere.

The finished loose fill insulation is compacted to a density of 100-500 kg/m³, preferably 200-400 kg/m³ and is typically packaged for facilitated handling for personnel and to able to be used in buildings and other areas where insulation is needed. By compressing the volume during transportation can be reduced significantly. One problem with traditional handling of loose fill insulation is that the transport costs, to for example a construction site often constitutes of up to 30% of the cost of the material.

Excess material, surplus material and recycled insulation of the same type from tom down buildings can also be reused and returned to the production process.

### Description of the drawings

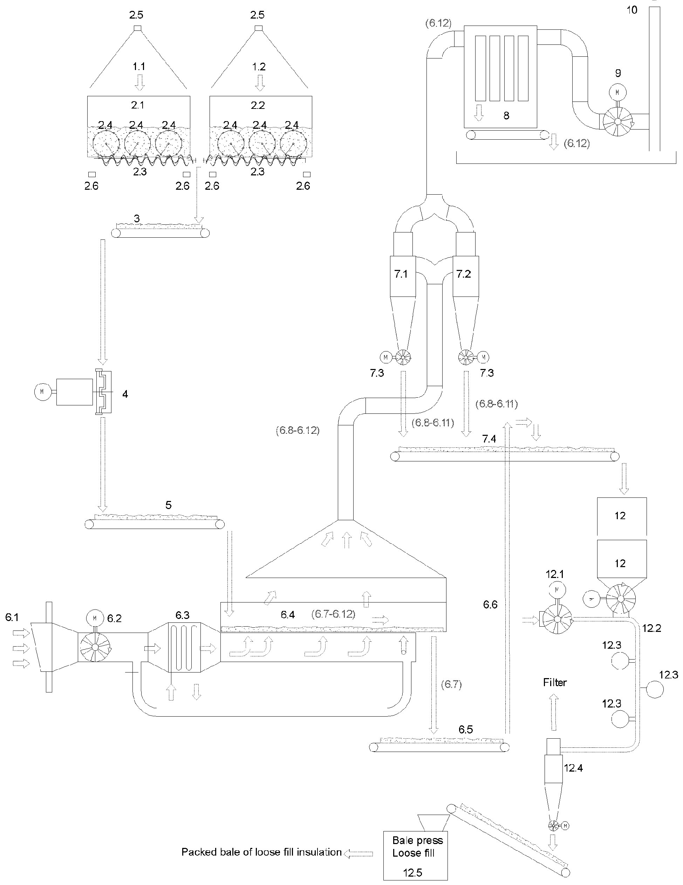

Figure 1 a schematic description of an embodiment of the process for production of loose fill according to the present disclosure.

### Components for the process

1.1., 1.2 Starting raw material that can contain biological material such as different types of plants and can contain, e.g. lignin-containing cellulosic material.
2.1, 2.2 Storage pockets with smooth walls. The number of storage pockets may be several if more types of raw material will be used.
2.3 Feeding screws (2.3) for feeding of raw material to a transportation belt (3).
2.4 Paddle wheel equipped with breaks to not get stuck or reverse, in case the level of material becomes too low in the storage pockets (2.1, 2.2).
2.5 3D-cameras to estimate remaining amount of raw material in each storage pocket.
2.6 Scales arranged below the storage pockets (2.1, 2.2) to control the velocity of the feeding screws (2.3).
3 Transportation belt for transportation of the material from the storage pockets (2.1, 2.2.) to the milling device (4).
4 The milling device is an equipment to disintegrate the mixed material from the storage pockets (2.1, 2.2) to suitable fiber length and fiber thickness. The milling device (4) may be cooled with water or air to avoid fire.
5 Transportation belt for transportation of the disintegrated material from the milling device (4) to the dry oven (6).
6.1 Air inlet to the drying oven (6)
6.2 Fan prior to the drying oven (6) for providing of dry air to the drying oven (6). The fan gives an air stream of 20 000 - 60 000 m³/h.
6.3 Pre-heater of air to the drying oven (6) to a temperature of 135-185 °C.
6 Drying oven for drying of the disintegrated material from the milling device (4) to the desired moisture content.
6.4 Material transport in the drying oven (6) for transportation of the fibers through the drying oven (6) to the next process step (6.5).
6.5 Transporter for transportation of the material from the drying oven (6) to mixing transporter (7.4).
6.6 Transport of fibers from the transporter (6.5) to the mixing transporter (7.4).
6.7 A first fiber stream that has been dried in the drying oven (6) and has a fiber length of above about 5 mm.
6.8 A second fiber stream that has been dried in the drying oven (6) and has a fiber length of less than about 5 mm and a fiber thickness of 0.01-0.5 mm.
6.9 A fiber fraction that has been dried in the drying oven (6) and has a fiber length of about 0.5-5 mm.
6.10 A fiber fraction that has been dried in the drying oven (6) and has a fiber length of less than 0.5 mm.
6.11 A fiber fraction that has been dried in the drying oven (6) and has a fiber length of 0.1-0.5 mm.
6.12 A fiber fraction that has been dried in the drying oven (6) and has a fiber length of less than 0.1 mm, typically 0.001-0.1 mm.
7.1 Cyclone to extract the fractions (6.8-6.12) and thereby separate the larger fractions (6.8-6.11) that are returned to the process.
7.2 Cyclone to extract the fractions (6.8-6.12) and thereby separate the larger fractions (6.8-6.11) that are returned to the process.
7.3 Cell feeder for mixing transporter.
7.4 Mixing transporter wherein fibers (6.7) coming directly from the drying oven (6) are mixed with the somewhat larger fractions (6.8-6.11) from the cyclones (7.1-7.2).
8 Separation filter to collect the finest fiber fraction (6.12) from the cyclones (7.1-7.2), so that air stream can be exit to the surrounds through the outlet (10).
9 Fan to control the counter-pressure in the process so that desired fiber sizes are separated to the mixing transporter (7.4).
10 Outlet for the separation filter (8).
12 Collecting vessel with a scale station to whey the material from the mixing transporter (7.4) to estimate the amount of fire-retardant substance to be added.
12.1 Fan prior to mixing tube (12.2).
12.2 Mixing tube for addition of fire-retardant substance. The tube has a length of 15-50 m, preferably 20-40 m, and a diameter of 140-300 mm.
12.3 Nozzles for addition of fire-retardant substance.
12.4 Cyclone of vortex-type for separation of air from the fiber stream from the mixing tube (12.2).
12.5 Bale compressing device of conventional type.
12.6 Packaging unit of conventional type.

### Example

The process concerns production of loose fill insulation comprising plant fibers and conducted with a process comprising the following steps.

Raw material in the process includes different types plants and can, for example, include a lignin-containing cellulosic material med a natural moisture content of 30-70 wt-% from different species according to a recipe with one, two or more species. The different raw materials (1.1, 1.2 or more) are loaded individually or together into storage pockets (2.1, 2.2 or more), which are provided with smooth walls and feeding screws (2.3) to a transportation belt (3) or vessel. A camera with 3D-functionality (2.5) is mounted above each storage pocket (2.1, 2.2) och calculates by means of a microprocessor the volume of remaining raw material in each of the storage pockets and indicate when filling of the storage pocket is needed. Upon discharging from the storage pocket (2.1 or 2.2) formation of a valve is hindered by the use of a paddle wheel (2.4) that assures that the material is continuously available for the discharge screw (2.3). A thorough proportion of the raw materials according to the recipe is conducted by means of scales (2.6) situated below the storage pockets (2.1, 2.2) that controls the velocity of the discharge screws (2.3) from each storage pocket (2.1, 2.2). The paddle wheel (2.4) are provided with breaks to avoid getting stuck or reverse, in case the level of material would be so low that the material do not break the paddle wheel (2.4), when the transportation screws (2.3) drives them.

Discharge is conducted through a funnel-like device to vessel or transportation belt (3) for further transport to a milling device. The raw material are fed into the milling device (4) and disintegrated to desired fiber size through control of the distance between the refiner discs, the rounds per minute of the milling device and design of the refiner discs. Since the moisture content in the raw material (1.1, 1.2) is low (30-70 wt%) and excess of heat is developed during refining in the milling device (4) which is needed to drive off to not risk starting of a fire or machine failure. For this purpose, the milling device (4) may need cooling with water or air. When the process is stopped, moisture is injected into the milling chamber of the milling device (4) to avoid the occurrence of fire. Consequently, the raw material is converted into fibers at a relatively low temperature (20 - 50 °C) that preserves the hygroscopic properties of the fibers. In the milling chamber of the milling device (4), the fibers are refined to different length and thickness.

Among these fibers there may still be present, depending on the source of the raw material, gravel, pebbles, small stones, dust or fibers from the raw material (1.1, 1.2) that is heated so that fire may occur. With a fire watch, temperature sensor or heat camera the fiber material is being monitored on the transportation belt (5) before it reaches the drying oven (6). If too high heat or fire is detected, the transportation belt (5) is stopped and fibers are no longer forwarded into the drying oven (6). Air, at a flow speed of 20 000 - 60 000 m³/h is sucked into the inlet (6.1) by the fan (6.2). The air is heated in the pre-chamber (6.3) to around 135-185 °C. In the drying oven (6) the fibers are placed on a stainless steel bed that slowly forwards them through the drying oven (6). Thereby air flows through the fibers and fries them to a dry content of around 10% in the fiber material. The larger fibers with substantially a length of at least 5 mm stays on the belt in a first fiber stream, while the smaller fibers with a length of below 5 mm forms a second fiber stream (6.8-6.12) that follows the hot air to the cyclones (7.1-7.2). In the cyclones, the second fiber stream (6.8-6.12) is separated into a second fiber fraction (6.8.-6.11) and a first fiber fraction (6.12). The size of the fibers that are separated in the cyclones is regulated by a counter-pressure that is created by a fan (9) situated after a separation filter (8) in the air flow. The first fiber fraction (6.12) is forwarded to combustion. The separation filter (8) separates the first fiber fraction (6.12) with a fiber length of substantially below 0.1 mm in the air flow to such extent that emission of the process air to the surrounding air can occur (10). The fraction (6.12) with particles with a fiber length of below 0.1 mm is thereby excluded from the insulation material, which, as a consequence, will not dust when the insulation material later is applied with blow machines on-site of the customer.

The first fiber stream (6.7) exiting the oven (6) with a fiber length of at least about 5 mm is forwarded on a transportation belt (6.5) and transported with (6.6) from the oven (6) to a mixing transporter (7.4) with those in the cyclones (7.1-7.2) separated second fiber fraction (6.8-6.11) for further transport to a scale (12) with multiple chambers, where weighing of portions is conducted.

When a portion of the fibers is carefully weighed to be able to calculate the amount of fire-retardant substance, the portion is blown with the aid of a fan (12.1) by tempered air (50-80 °C) at a controlled pressure into a mixing tube (12.2) with a length of 20 - 50 m and a diameter of 140 - 300 mm where fire-retardant substance having a weight percent of 4 - 15 % is injected through nozzles (12.3) when the fibers in the weighed portion passes. The position of the nozzles, the length of the mixing tube (12.2) and the flow speed of the air stream is adapted so that good absorption of the fire-retardant substance in the loos fill occurs. The fiber is further transported by the air flow in the mixing tube (12.2) to a cyclone of vortex type (12.4), which is specifically designed for excessive separation of air so that formation of arcs of fibers in the lower part of the cyclone (12.4) is avoided. Compacted bales of loose fill having a density of 100 - 500 kg/m³, preferably 200 - 400 kg/m³, is created by a bale press (12.5) according to conventional technology. At a later stage the compacted bale in a packaging machine (12.6) and is wrapped with packaging material according to conventional technology for further transport to the customer.

The method according to the present disclosure is a continuous process and fully automatic for manufacturing of loose fill insulation with material directly from nature as raw material and that with careful monitoring and control provides quality of the end product.

## Claims

1. Process for manufacturing of loose fill insulation comprising plant fibers **characterized by** that the process comprises the following steps:
a) Proportion of plant fiber raw material (1.1 and 1.2);
b) Refining of the proportioned plant fiber raw material (1.1, 1.2);
c) Transportation of the proportioned and refined plant fiber raw material to drying, whereby the temperature of the proportioned and refined plant fiber raw material is kept below 185 °C during the transport;
d) Drying at a temperature of below 185 °C of the proportioned and refined plant fiber raw material with hot air and/or microwaves;
e) Blowing with an air stream at a temperature of below 185 °C that separates a first fiber stream with fiber sizes having a substantial length of at least 5 mm (6.7) from a second fiber stream with a substantial fiber lengths of below 5 mm and a substantial thickness of below 0.5 mm (6.8-6.12), whereby the second fiber stream (6.8 - 6.12) is carried by the hot air further to at least one cyclone (7.1) wherein the fibers are separated in an at least first (6.12) and a second fiber fraction of the second fiber stream (6.8-6.11), wherein the first size fraction (6.12) contains fibers with a fiber length of substantially below 0.1 mm and the second size fraction (6.8-6.11) contains fibers with substantially a fiber length of 0.1 - 5 mm;
f) Mixing of the first fiber stream (6.7) and the second fiber fraction (6.8-6.11) that has been separated in the at least one cyclone (7.1);
g) Separation of air from the mixed first fiber stream (6.7) and the second fiber fraction (6.8-6.11) with a vortex-equipment (12.4);
h) Pressing (12.5) of the de-aired mix to a bale of loose fill insulation, wherein the bale has a density of 10 - 500 kg/m³, preferably 100 - 500 kg/m³, more preferably 200-400 kg/m³.

2. Process for manufacturing loose fill insulation according to claim 1 **characterized by** that the raw material (1.1, 1.2) comprises fibers of cellulosic material.

3. Process for manufacturing loose fill insulation according to claim 1 **characterized by** that the raw material (1.1, 1.2) comprises grass.

4. Process for manufacturing loose fill insulation according to claim 1 **characterized by** that the raw material (1.1, 1.2) comprises fibers of lignin-containing cellulosic material.

5. Process for manufacturing loose fill insulation according to claim 1 **characterized by** that the raw material (1.2, 1.2) comprises fibers of bamboo.

6. Process for manufacturing loose fill insulation according to any one of the claims 1-5 **characterized by** that the flow speed of the air stream in step e) is 20 000 - 60 000 m³/h.

7. Process for manufacturing loose fill insulation according to any one of the claims 1-6 **characterized by** that the drying in step d) provides a dry content of maximum 10 wt% of the first and second stream.

8. Process for manufacturing loose fill insulation according to any one of the claims 1-7 **characterized by** that the process further comprises the following steps conducted after step e) and prior step f):
i. Further transport to a scale station (12) of the mixture;
ii. Weighing in the scale station (12) of portions of fibers from the mixture for calculation of necessary amount of fire-retardant substance;
iii. Blowing of weighed portions from the scale into a mixing tube (12.2) wherein the weighed portion passes nozzles (12.3) along the tube that injects 4 - 15 wt% of fire-retardant substance, wherein the length of the mixing tube (12.2) is adapted to air flow speed and absorption time.

9. Process for manufacturing loose fill insulation according to any one of the claims 1-8 **characterized by** that the mixing tube (12.2) has a length of 20 - 50 m och preferably a diameter of 140 - 300 mm.

10. Loose fill insulation material **characterized by** that it has been produced with a process according to any one of the claims 1-9 and contains fire-retardant substance.

11. Loose fill insulation material according to claim 10 **characterized by** that it contains 4 - 15 wt% fire-retardant substance.

## Patentansprüche

1. Verfahren zur Herstellung von Schüttdämmung, umfassend Pflanzenfasern, **dadurch gekennzeichnet, dass** das Verfahren die folgenden Schritte umfasst:
a) Dosieren des Pflanzenfaser-Rohmaterials (1.1 und 1.2);
b) Aufbereiten des dosierten Pflanzenfaser-Rohmaterials (1.1, 1.2);
c) Transportieren des dosierten und aufbereiteten Pflanzenfaser-Rohmaterials zur Trocknung, wobei die Temperatur des dosierten und aufbereiteten Pflanzenfaser-Rohmaterials während des Transports unter 185 °C gehalten wird;
d) Trocknen des dosierten und aufbereiteten Pflanzenfaser-Rohmaterials bei einer Temperatur unter 185 °C mit Heißluft und/oder Mikrowellen;
e) Blasen mit einem Luftstrom bei einer Temperatur unter 185 °C, der einen ersten Faserstrom mit Faserlängen von im Wesentlichen mindestens 5 mm (6.7) von einem zweiten Faserstrom mit Faserlängen von im Wesentlichen unter 5 mm und einer Dicke von im Wesentlichen unter 0,5 mm (6.8-6.12) trennt, wobei der zweite Faserstrom (6.8-6.12) von der Heißluft weiter zu mindestens einem Zyklon (7.1) befördert wird, wobei die Fasern in eine mindestens erste (6.12) und eine zweite Faserfraktion des zweiten Faserstroms (6.8-6.11) getrennt werden, wobei die erste Größenfraktion (6.12) Fasern mit einer Faserlänge von im Wesentlichen unter 0,1 mm enthält und die zweite Größenfraktion (6,8-6,11) Fasern mit einer Faserlänge von im Wesentlichen 0,1-5 mm enthält;
f) Mischen des ersten Faserstroms (6.7) und der zweiten Faserfraktion (6.8-6.11), die in dem mindestens einen Zyklon (7.1) abgetrennt wurde;
g) Abtrennen von Luft aus dem gemischten ersten Faserstrom (6.7) und der zweiten Faserfraktion (6.8-6.11) mit einer Wirbelvorrichtung (12.4);
h) Pressen (12.5) der entlüfteten Mischung zu einem Ballen aus loser Dämmung, wobei der Ballen eine Dichte von 10-500 kg/m3, vorzugsweise 100-500 kg/m³, noch bevorzugter 200-400 kg/m³ aufweist.

2. Verfahren zur Herstellung von Schüttdämmung nach Anspruch 1, **dadurch gekennzeichnet, dass** das Rohmaterial (1.1, 1.2) Fasern aus Zellulosematerial umfasst.

3. Verfahren zur Herstellung von Schüttdämmung nach Anspruch 1, **dadurch gekennzeichnet, dass** das Rohmaterial (1.1, 1.2) Gras umfasst.

4. Verfahren zur Herstellung von Schüttdämmung nach Anspruch 1, **dadurch gekennzeichnet, dass** das Rohmaterial (1.1, 1.2) Fasern aus ligninhaltigem Zellulosematerial umfasst.

5. Verfahren zur Herstellung von Schüttdämmung nach Anspruch 1, **dadurch gekennzeichnet, dass** das Rohmaterial (1.1, 1.2) Bambusfasern umfasst.

6. Verfahren zur Herstellung von Schüttdämmung nach einem der Ansprüche 1-5, **dadurch gekennzeichnet, dass** die Strömungsgeschwindigkeit des Luftstroms in Schritt e) 20.000-60.000 m³/h beträgt.

7. Verfahren zur Herstellung von Schüttdämmung nach einem der Ansprüche 1-6, **dadurch gekennzeichnet, dass** die Trocknung in Schritt d) einen Trockengehalt von maximal 10 Gew.-% des ersten und zweiten Stroms bereitstellt.

8. Verfahren zur Herstellung von Schüttdämmung nach einem der Ansprüche 1 bis 7, **dadurch gekennzeichnet, dass** das Verfahren ferner die folgenden Schritte umfasst, die nach Schritt e) und vor Schritt f) durchgeführt werden:
i. Weiteres Transportieren der Mischung zu einer Wiegestation (12);
ii. Abwiegen von Fasermengen aus der Mischung in der Wiegestation (12) zur Berechnung der erforderlichen Menge an flammhemmendem Stoff;
iii. Einblasen der abgewogenen Portionen von der Wiegestation in ein Mischrohr (12.2), wobei die abgewogene Portion an Düsen (12.3) entlang des Rohrs vorbeiströmt, die 4-15 Gew.-% des flammhemmenden Stoffs einspritzen, wobei die Länge des Mischrohrs (12.2) an die Luftströmungsgeschwindigkeit und die Absorptionszeit angepasst ist.

9. Verfahren zur Herstellung von Schüttdämmung nach einem der Ansprüche 1-8, **dadurch gekennzeichnet, dass** das Mischrohr (12.2) eine Länge von 20-50, noch bevorzugter einen Durchmesser von 140-300 mm aufweist.

10. Schüttdämmung, **dadurch gekennzeichnet, dass** sie nach einem Verfahren nach einem der Ansprüche 1 bis 9 hergestellt wurde und einen flammhemmenden Stoff enthält.

11. Schüttdämmung nach Anspruch 10, **dadurch gekennzeichnet, dass** sie 4 bis 15°Gew.-% flammhemmenden Stoff enthält.

## Revendications

1. Procédé de fabrication d'un isolant en vrac comprenant des fibres végétales **caractérisé en ce que** le procédé comprend les étapes suivantes :
a) dosage de la matière première de fibres végétales (1.1 et 1.2) ;
b) raffinage de la matière première de fibres végétales (1.1, 1.2) dosée ;
c) transport de la matière première de fibres végétales dosée et raffinée vers le séchage, la température de la matière première de fibres végétales dosée et raffinée étant maintenue en dessous de 185 °C pendant le transport ;
d) séchage à une température inférieure à 185 °C de la matière première de fibres végétales dosée et raffinée à l'air chaud et/ou aux micro-ondes ;
e) soufflage avec un flux d'air à une température inférieure à 185 °C qui sépare un premier flux de fibres avec des tailles de fibre ayant une longueur substantielle d'au moins 5 mm (6.7) d'un second flux de fibres avec longueur de fibres substantielle inférieure à 5 mm et une épaisseur substantielle inférieure à 0,5 mm (6.8-6.12), le second flux de fibres (6.8-6.12) étant transporté plus loin par l'air chaud vers au moins un cyclone (7.1) dans lequel les fibres sont séparées en au moins une première (6.12) et une seconde fraction de fibres du second flux de fibres (6.8-6.11), dans lequel la première fraction de taille (6.12) contient des fibres avec une longueur de fibres substantiellement inférieure à 0,1 mm et la seconde fraction de taille (6.8-6.11) contient des fibres avec une longueur de fibres substantiellement de 0,1 à 5 mm ;
f) mélange du premier flux de fibres (6.7) et de la seconde fraction de fibres (6.8-6.11) qui a été séparée dans l'au moins un cyclone (7.1) ;
g) séparation de l'air du premier flux de fibres (6.7) et de la seconde fraction de fibres (6.8-6.11) mélangés avec un équipement de type vortex (12.4) ;
h) pressage (12.5) du mélange désaéré en une balle d'isolant en vrac, dans lequel la balle a une masse volumique de 10 à 500 kg/m³, de préférence de 100 à 500 kg/m³, plus préférablement de 200 à 400 kg/m³.

2. Procédé de fabrication d'un isolant en vrac selon la revendication 1 **caractérisé en ce que** la matière première (1.1, 1.2) comprend des fibres de matière cellulosique.

3. Procédé de fabrication d'un isolant en vrac selon la revendication 1 **caractérisé en ce que** la matière première (1.1, 1.2) comprend de l'herbe.

4. Procédé de fabrication d'un isolant en vrac selon la revendication 1 **caractérisé en ce que** la matière première (1.1, 1.2) comprend des fibres de matière cellulosique contenant de la lignine.

5. Procédé de fabrication d'un isolant en vrac selon la revendication 1 **caractérisé en ce que** la matière première (1.1, 1.2) comprend des fibres de bambou.

6. Procédé de fabrication d'un isolant en vrac selon l'une quelconque des revendications 1 à 5 **caractérisé en ce que** le débit du flux d'air à l'étape e) est de 20 000 à 60 000 m³/h.

7. Procédé de fabrication d'un isolant en vrac selon l'une quelconque des revendications 1 à 6 **caractérisé en ce que** le séchage à l'étape d) fournit une teneur en matière sèche maximale de 10 % en poids des premier et second flux.

8. Procédé de fabrication d'un isolant en vrac selon l'une quelconque des revendications 1 à 7 **caractérisé en ce que** le procédé comprend en outre les étapes suivantes réalisées après l'étape e) et avant l'étape f) :
i. transport supplémentaire du mélange vers une station de pesage (12) ;
ii. pesage dans la station de pesage (12) de portions de fibres provenant du mélange pour calculer la quantité nécessaire de substance ignifuge ;
iii. soufflage des portions pesées depuis le pesage dans un tube mélangeur (12.2) dans lequel la portion pesée passe à travers des buses (12.3) le long du tube qui injecte 4 à 15 % en poids de substance ignifuge, dans lequel la longueur du tube mélangeur (12.2) est adaptée au débit du flux d'air et au temps d'absorption.

9. Procédé de fabrication d'un isolant en vrac selon l'une quelconque des revendications 1 à 8 **caractérisé en ce que** le tube mélangeur (12.2) a une longueur de 20 à 50 m et de préférence un diamètre de 140 à 300 mm.

10. Matériau isolant en vrac **caractérisé en ce qu'**il a été produit avec un procédé selon l'une quelconque des revendications 1 à 9 et contient une substance ignifuge.

11. Matériau isolant en vrac selon la revendication 10 **caractérisé en ce qu'**il contient de 4 à 15 % en poids d'une substance ignifuge.
